# EUROPÄISCHE PATENTANMELDUNG

(11) **EP 1 130 832 A2**
(43) Veröffentlichungstag der Anmeldung: **05.09.2001**
(21) Anmeldenummer: 01108435.7
(22) Anmeldetag: 14.04.2000
(51) Int. Cl.: H04H 1/00

(54) **Verfahren und Vorrichtung zum Steuern eines Computers, bei dem die Anweisungsinformationen für die Steuerung des Computers mit einem digitalen Rundfunksignal übertragen, und von einem dem Computer zugefügten Empfänger empfangen werden**

(30) Priorität: 16.04.1999 DE 19917402
(62) Teilanmeldung aus: 00108333.6
(71) Anmelder: Trend Network AG, 40210 Düsseldorf (DE)
(72) Erfinder: Suhr, Steffen, 44791 Bochum (DE); Möller, Michael, 40625 Düsseldorf (DE)
(74) Vertreter: Cohausz & Florack

(57) **Zusammenfassung**

Die Erfindung betrifft ein Verfahren zum Steuern eines Computers, bei dem von einem Computer mit Hilfe einer Empfangsvorrichtung ein digitales Rundfunksignal empfangen wird, bei dem aus dem digitalen Rundfunksignal Teilsequenzen herausgefiltert werden, die Anweisungsinformationen enthalten und bei dem die Anweisungsinformationen vom Computer interpretiert und zur Steuerung des Computers ausgeführt werden.

Die Erfindung betrifft auch eine Vorrichtung zum Durchführen des Verfahrens.

## Beschreibung

Die Erfindung betrifft ein Verfahren zum Steuern eines Computers mit den gattungsgemäßen Merkmalen des Anspruches 1. Daneben betrifft die Erfindung eine Vorrichtung mit den Merkmalen des Oberbegriffes des Anspruches 15.

Der vorliegenden Erfindung liegt das technische Problem zugrunde, das Verfahren und die Vorrichtung zum Steuern eines Computers dahingehend zu verbessern, daß das Steuern des Computers über weite Entfernungen ohne direkte Datenverbindung möglich wird.

Das zuvor aufgezeigte technische Problem wird erfindungsgemäß durch ein Verfahren nach Anspruch 1 sowie durch eine Vorrichtung nach Anspruch 15 gelöst. Weitergehende Ausgestaltungen der Erfindung sind Gegenstand der Unteransprüche. Die Erfindung wird nachfolgend in einer Anwendung eines Verfahrens zum Vorführen von Informationen sowie unabhängig davon beschrieben.

Dem Verfahren zum Vorführen von Informationen liegt die Erkenntnis zugrunde, das lediglich ein Teil der vorgeführten Informationen regelmäßig aktualisiert werden muß, während der weitaus größte Teil der Informationen eine ausreichende Aktualität besitzt, um als Stamminformationen auf dem Computer gespeichert zu sein. Daher können die Stamminformationen in größeren Datenmengen gespeichert sein, so daß zumindest der weitaus größte Teil der vorgeführten Informationen eine hohe Vorführqualität besitzt. Lediglich die zu aktualisierenden Informationen müssen als Zusatzinformationen mit Hilfe der Sendevorrichtung und der Empfangsvorrichtung auf den Computer übertragen werden. Diese Zusatzinformationen werden dann dazu verwendet, die vorgeführten Informationen zu verändern, insbesondere zu aktualisieren.

Die Zusatzinformationen werden über Digital Multimedia Broadcasting (DMB) übertragen. Gemäß internationalen Standardisierungen des digitalen Hörfunks (Digital Audio Broadcasting, DAB) und des digitalen Fernsehfunks (Digital Video Broadcasting, DVB) weisen die ausgestrahlten Datenbitsequenzen erste Abschnitte mit Audio- und/oder Videodaten und zweite Abschnitte mit Zusatzdaten auf. Die zweiten Abschnitte werden auch als Program Associated Data (PAD) bzw. als Non Program Associated Data (NPAD) bezeichnet. Die zweiten Abschnitte der Datenbitsequenzen sind weiterhin in Blöcke mit vorgegebener Größe, vorzugsweise 8 kbit, unterteilt, mit denen die Zusatzdaten als Multimedia Object Transform (MOT)-Blöcke übertragen werden.

Die Zusatzinformationen werden für das Verfahren als MOT-Blöcke, die eine Teilsequenz der gesamten ausgestrahlten Datenbitsequenzen darstellen, auf das Fahrzeug übertragen. Der Computer selektiert dann aus dem gesamten Datenbitstrom die Teilsequenzen, also die MOT-Blöcke heraus, in denen die Zusatzinformationen enthalten sind.

Der Vorteil der Übertragung der Zusatzinformationen mit Hilfe von Digital Audio Broadcasting (DAB) oder Digital Video Broadcasting (DVB) liegt darin, daß dieser der digitale Hörfunk flächendeckend ausgestrahlt wird. Somit ist für die Durchführung des Verfahrens kein besonderes Netz von Sendern und Sendefrequenzen oder eine mobile Telefonverbindung zur Datenübertragung erforderlich. Außerdem müssen für die Durchführung des Verfahrens nur sehr geringe Teilsequenzen des gesamten Datenbitstromes für die Übertragung der Zusatzinformationen reserviert werden. Die Übertragung der Zusatzinformationen ist somit preisgünstig.

Das zuvor beschriebene Verfahren ist in bevorzugter Weise bei bewegten Fahrzeugen anwendbar, wobei insbesondere Schienenfahrzeuge und Busse des öffentlichen Personenverkehrs für eine Anwendung des Verfahrens geeignet sind. Darüber hinaus kann das Verfahren auch angewendet werden, um an festen Standorten, wie beispielsweise an Haltestellen, Bahnhöfen oder Flughäfen, die Informationen vorzuführen.

Als Stamminformationen dienen beispielsweise Kurzfilme, Videokunst, Computeranimation, Trickfilme sowie jegliche Form von Werbeinformationen. Als Zusatzinformationen können beispielsweise Haltestelleninformationen, Umsteigeund Anschlußinformationen, insbesondere auch für eine Vernetzung mit anderen öffentlichen oder privaten Verkehrsmitteln, Wetternachrichten, Nachrichtenschlagzeilen, Börseninformationen, Veranstaltungshinweise, Bürgerinformationen oder Touristikinformationen übertragen werden. Die Zusatzinformationen werden dann derart mit den Stamminformationen verbunden, daß in Abhängigkeit von den Zusatzinformationen die auf Vorführvorrichtungen dargestellten Informationen verändert, insbesondere aktualisiert werden.

Die Stamminformationen werden vorzugsweise mit Hilfe einer Datenleitung über Telefon, einem lokalen Netzwerk oder mittels Datenträgeraustausch auf den Computer übertragen. Das bedeutet für die Anwendung bei Fahrzeugen, daß die Stammdaten während des Aufenthaltes an vorgegebenen Standorten, wie bspw. Betriebshöfen, auf den Computer im Fahrzeug übertragen werden. Für stationäre Anwendungen werden die Stammdaten bspw. mittels einer Telefonverbindung auf dem Computer gespeichert, während die Zusatzinformationen - bspw. während der Fahrt - über die Sende- und Empfangsvorrichtungen übertragen werden.

In bevorzugter Weise werden mit Hilfe der Zusatzinformationen die Inhalte der vorgeführten Informationen verändert, so daß beispielsweise die Daten eines Wetterberichtes mit Hilfe der Zusatzinformationen aktualisiert werden, der während eines vorgegebenen Zeitablaufes der vorgeführten Informationen in regelmäßigen Abständen vorgeführt wird.

In besonders bevorzugter Weise weisen die Zusatzinformationen zumindest teilweise ausführbare Anweisungen auf, die mit Hilfe des Computers interpretiert werden können. Somit werden Steuerbefehle auf den Computer übertragen, um nicht nur den Inhalt, sondern auch die zeitliche Reihenfolge der vorgeführten Informationen zu verändern. Dadurch wird der zeitlichen Ablauf der vorgeführten Informationen, also das Programm selbst, beeinflusst, um beispielsweise eine aktuelle Nachrichtenschlagzeile einzufügen. Eine große Aktualität der vorgeführten Informationen wird somit erreicht, ohne daß die Informationen des gesamten Programmes übertragen werden müssen.

In weiter bevorzugter Weise werden die als Zusatzinformationen übertragenen ausführbaren Anweisungen dazu verwendet, um objektorientierte Informationen im Computer entsprechend der Anweisungen zusammenzuführen und für die Vorführung vorzubereiten. Beispielsweise können im Computer abgespeicherte Objekte, die als Symbole für die Darstellung eines Wetterberichtes verwendet werden, entsprechend der übertragenen Anweisungen vom Computer zusammengeführt und für eine Vorführung vorbereitet werden. Somit wird mit einem Minimum an Zusatzinformationen eine hohe Qualität der dargestellten Informationen, beispielsweise eine filmähnliche Bildersequenz eines Wetterberichtes, produziert. Dabei sind die objektorientierten Informationen vorzugsweise als Stamminformationen auf dem Computer gespeichert, jedoch können diese auch als Zusatzinformationen übertragen werden.

Die bisher angeführten Beispiele beziehen sich darauf, daß die Stamm- und Zusatzinformationen zu bildlichen Informationen verarbeitet werden. Darüber hinaus läßt sich das erfindungsgemäße Verfahren auch für akustische Informationen oder auch für eine Kombination von bildlichen und akustischen Informationen nutzen.

In einer weiteren bevorzugten Ausgestaltung der vorliegenden Erfindung ist der Computer mit einem geographischen Positionierungssystem, insbesondere einem Global Positioning System (GPS) verbunden, so daß der Computer die Zusatzinformationen in Abhängigkeit von der geographischen Position des Fahrzeuges auswertet. Beispielsweise können somit Umsteige- und Anschlußinformationen in Abhängigkeit von der nächsten Haltestelle des Fahrzeuges aus den übertragenen Zusatzinformationen herausselektiert werden. Dazu kann in weiter bevorzugter Weise auf ein bereits bestehendes Fahrgastinformationssystem zurückgegriffen werden.

Die vorliegende Erfindung weist auch unabhängig von der Anwendung bei einem Verfahren zum Vorführen von Informationen selbständig erfinderischen Charakter auf. Es besteht darin, daß die mittels digitalisierter Funkwellen ausgestrahlten Datenbitsequenzen Teilsequenzen aufweisen, die ausführbare Anweisungsinformationen enthalten. Erfindungsgemäß ist erkannt worden, daß die bisher lediglich zur reinen Datenübertragung vorgesehenen MOT-Blöcke auch zur Übertragung von ausführbaren Anweisungen geeignet sind. Somit ist es beispielsweise mit Hilfe des Digital Audio Broadcasting (DAB) oder des Digital Video Broadcasting (DVB) möglich, Computer, die die digitalen Informationen des Hörfunks aufnehmen und auswerten, durch die Anweisungsinformationen zu steuern. Dazu wird eine vorgegebene Skriptsprache verwendet, die vom Computer interpretiert, insbesondere laufzeitinterpretiert werden kann. Dieses kann auch als Real-Time-Steuerung bezeichnet werden.

In bevorzugter Weise wird das zuvor beschriebene Verfahren zum Übertragen von mit Hilfe eines Computers ausführbaren Anweisungsinformationen bei den oben beschriebenen Verfahren zum Vorführen von Informationen in einem bewegten Fahrzeug dazu verwendet, die ausführbaren Anweisungsinformationen, die im Datenbitstrom der digitalisierten Funkwellen enthalten sind, als Zusatzinformationen für die Beeinflussung der vorgeführten Informationen zu verwenden.

Die zuvor beschriebenen Verfahren sind unabhängig davon, in welcher Weise der Digital Multimedia Broadcasting (DMB) auf die Empfangsvorrichtung übertragen wird. So wird Digital Audio Broadcasting (DAB) und Digital Video Broadcasting (DVB) sowohl terrestrisch als auch via Satellit ausgestrahlt. Dementsprechend sind dann die Empfangsvorrichtungen entweder als terrestrische Antennen oder als Satellitenantennen ausgebildet. Insbesondere bei bewegten Fahrzeugen ist bei der Verwendung von Satellitenantennen dafür Sorge zu tragen, daß diese immer auf den ausstrahlenden Satelliten ausgerichtet sind. Derartige Satellitenempfänger sind jedoch bereits aus dem Stand der Technik bekannt und können somit auch bei bewegten Fahrzeugen wie Bussen oder Bahnen eingesetzt werden.

Darüber hinaus kann der Digital Multimedia Broadcasting (DMB) mit einer Frequenz im Ultra High Freqency (UHF) Bereich, Mikrowellenbereich oder im Radarwellenbereich übertragen werden. Letztere beiden Techniken werden zukünftig verbreitet eingesetzt werden, wobei die Datenübertragungsraten gegenüber dem UHF-Bereich deutlich erhöht werden.

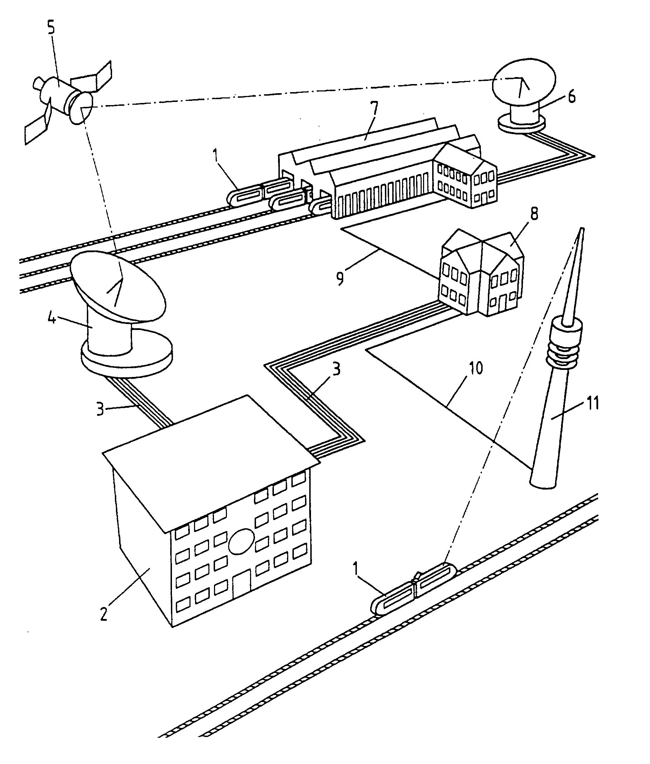

Im folgenden wird die Erfindung anhand eines Ausführungsbeispieles näher erläutert, wobei auf die beigefügte Zeichnung Bezug genommen wird. In der Zeichnung zeigt die einzige Figur ein Ausführungsbeispiel des erfindungsgemäßen Verfahrens sowie einer erfindungsgemäßen Vorrichtung zum Steuern eines Computers in einem Schienenfahrzeug in einer schematischen perspektivischen Darstellung.

In einem Sendestudio 2 findet eine sogenannte Offline-Produktion statt, bei der alle Grundlagen für ein Programm einer vorgegebenen Zeiteinheit, beispielsweise ein tägliches Programm in Form von einzelnen Filmen erstellt. Vom Sendestudio 2 werden die vorgeplanten Informationen, beispielsweise Filmbeiträge, die Informationen aus Wirtschaft und Handel oder Werbeinformationen enthalten, über ein Intranet 3 an einen Sender 4 weitergegeben. Der Sender 4 überträgt die Informationen über einen Satelliten 5 und einen Empfänger 6 auf mindestens einen Betriebshof 7 des Betreibers der Schienenfahrzeuge 1. Im Betriebshof 7 werden die vom Sendestudio 2 empfangenen Informationen als Stamminformationen auf den im Schienenfahrzeug 1 angeordneten Computer (nicht dargestellt) übertragen. Somit findet eine Aktualisierung der Stamminformationen auf dem Computer während des Aufenthaltes des Schienenfahrzeuges 1 im Betriebshof 7 statt. Die Datenübertragung kann dabei mit Hilfe einer Datenleitung, einem lokalen Netzwerk oder mittels Datenträgeraustausch auf den Computer erfolgen.

Nachdem das Schienenfahrzeug 1 den Betriebshof 7 verlassen hat, werden die Stamminformationen auf Bildschirmgeräten (nicht dargestellt), die als Vorführvorrichtungen dienen, in einer vorprogrammierten Reihenfolge vorgeführt.

In einem zweiten Sendestudio 8, das im Ausführungsbeispiel getrennt vom ersten Sendestudio 2 ist und über das Intranet ebenfalls die Stamminformationen vom ersten Sendestudio 2 erhält, werden aktuelle Informationen gesammelt und in Form von Graphikobjekten, Texten und Skripten zusammengestellt. Dazu werden zum einen allgemeine Informationen in Form von Nachrichten aus Politik und Handel sowie Wetterprognosen gesammelt. Zum anderen werden aktuelle Meldungen von dem Betriebshof 7 bzw. von allen Betriebshöfen 7 des Betreibers über ein Intranet 9 übertragen. Diese Meldungen beziehen sich bspw. auf Fahrplaninformationen, die insbesondere Verspätungsmeldungen von Schienenfahrzeugen 1 des Betreibers beinhalten können.

Die zusammengefaßten aktuellen Informationen werden vom Sendestudio 8 über ein Intranet 10 auf einen Sender 11 übertragen. Von diesem werden die aktuellen Informationen als Zusatzinformationen auf die Schienenfahrzeuge 1 insbesondere dann übertragen, wenn sie unterwegs sind, also sich außerhalb der Betriebshöfe 7 befinden.

Im dargestellten Ausführungsbeispiel werden die Zusatzdaten über digitalen Hörfunk, Digital Audio Broadcasting (DAB), vom Sender 11 auf das Schienenfahrzeug 1 übertragen. Dabei werden die im folgenden beschriebenen Eigenschaften des digitalen Rundfunks ausgenutzt.

Die Zusatzinformationen werden zunächst auf einem Produktionsrechner im Betriebshof 7 der Online-Produktion als Graphiken, Bilder, Texte und/oder Skripte erzeugt. Diese werden in einer für die DAB-Ausstrahlung geeignete Form konvertiert und kodiert, so daß die Zusatzinformationen als Multimedia Object Transfer (MOT)-Daten an einen DAB-Multiplexer weitergegeben werden. Der DAB-Multiplexer fügt unter anderem die Zusatzinformationen zu einem DAB-Ensemble zusammen, das an den Sender 11 übertragen wird. Von diesem wird der digitale DAB-Datenstrom als terrestrische Übertragung ausgestrahlt. Um dabei auch eine Übertragung innerhalb von Tunneln, insbesondere auch im Falle von U-Bahnen zu gewährleisten, wird der digitale DAB-Datenstrom gegebenenfalls auch über spezielle Übertrager (Repeater) in die Tunnel weitergeleitet.

Der im Schienenfahrzeug 1 eingebaute Empfänger (nicht dargestellt) empfängt die ausgestrahlten Daten des digitalen Rundfunks. Der Computer, der mit dem Empfänger verbunden ist, speichert den DAB-Datenstrom zwischen und analysiert diesen, um die im DAB-Datenstrom enthaltenen MOT-Daten herauszufiltern. Die MOT-Daten werden anschließend in die ursprünglichen Graphiken, Bilder, Texte und Skripte als Zusatzinformationen dekodiert.

Sofern es sich bei den Zusatzinformationen um Graphiken, Bilder oder Texte handelt, werden diese vom Computer an gegebenenfalls vorgegebenen Positionen in das laufende Programm eingefügt. Dabei kann es sich beispielsweise um aktuelle Nachrichten oder um Fahrgastinformationen handeln.

Die Zusatzinformationen, die in Form von MOT-Daten übertragen worden sind, können auch Skripte in einer vorgegebenen Skriptsprache enthalten, die vom Computer interpretiert, insbesondere auch laufzeitinterpretiert werden können. Somit erhält der Computer über den digitalen Rundfunk Steuerbefehle, um aktiv den Ablauf des Programmes der vorgeführten Informationen zu beeinflussen.

Zum einen kann eine derartige Beeinflussung beispielsweise darin bestehen, ein Graphik-, Film- oder Textobjekt aus dem Programm herauszunehmen oder in dieses einzufügen, so daß die zeitliche Reihenfolge der vorgeführten Informationen verändert wird. Zum anderen können die ausführbaren Anweisungen vom Computer derart interpretiert werden, daß als Stamminformationen gespeicherte Graphik-, Film- und/oder Textobjekte miteinander kombiniert werden, wie im folgenden anhand des Beispieles eines aktualisierten Wetterberichtes beschrieben wird.

Für die bildliche Darstellung eines Wetterberichtes ist eine begrenzte Anzahl von Symbolen wie beispielsweise eine Sonne, Wolken oder Temperaturangaben sowie Landkarten zur geographischen Anordnung der Symbole erforderlich. Sind diese verschiedenen Symbole als Objekte in den Stamminformationen im Computer abgespeichert, so können mit den ausführbaren Anweisungen, die als Zusatzinformationen übertragen worden sind, die verschiedenen Objekte so zusammengestellt werden, das filmähnlicher aktualisierter Wetterbericht mit festen und/oder sich bewegenden Symbolen für eine bestimmte Region auf den Bildschirmen im Schienenfahrzeug 1 dargestellt wird. Der zuletzt beschriebene Vorgang kann auch als objektorientierte Steuerung des Vorführens von Informationen in einem bewegten Fahrzeug bezeichnet werden.

## Patentansprüche

1. Verfahren zum Steuern eines Computers,
- bei dem von einem Computer mit Hilfe einer Empfangsvorrichtung ein digitales Rundfunksignal empfangen wird,
- bei dem aus dem digitalen Rundfunksignal Teilsequenzen herausgefiltert werden, die Anweisungsinformationen enthalten, und
- bei dem die Anweisungsinformationen vom Computer interpretiert und zur Steuerung des Computers ausgeführt werden.

2. Verfahren nach Anspruch 1,
bei dem das digitale Rundfunksignal als Digital Multimedia Broadcasting (DMB) Rundfunksignal ausgebildet ist, wobei der DMB-Datenstrom erste Abschnitte mit Audio- und/oder Videodaten und zweite Abschnitte mit Zusatzdaten aufweist, und bei dem die Anweisungsinformationen aus den zweiten Abschnitten herausgefiltert werden.

3. Verfahren nach Anspruch 2,
bei dem die Anweisungsinformationen als Multimedia Object Transform Blöcke (MOT-Blöcke) im Datenbitstrom übertragen werden.

4. Verfahr3n nach einem der Ansprüche 1 bis 3,
bei dem die Anweisungsinformationen mittels Digital Audio Broadcasting (DAB) übertragen werden.

5. Verfahren nach einem der Ansprüche 1 bis 3,
bei dem die Anweisungsinformationen mittels Digital Video Broadcasting (DVB) übertragen werden.

6. Verfahren nach einem der Ansprüche 1 bis 5,
bei dem eine Skriptsprache verwendet wird, mit deren Hilfe die Anweisungsinformationen interpretiert werden.

7. Verfahren nach einem der Ansprüche 1 bis 6,
bei dem die Anweisungsinformationen laufzeitinterpretiert werden.

8. Verfahren nach einem der Ansprüche 1 bis 7,
bei dem mit Hilfe der Anweisungsinformationen objektorientierte Informationen zusammengeführt werden.

9. Verfahren nach einem der Ansprüche 1 bis 8,
- bei dem für ein Vorführen von Informationen auf mindestens einer Vorführvorrichtung Stamminformationen auf einem Computer gespeichert werden, die danach auf mindestens einer Vorführvorrichtung vorgeführt werden,
- bei dem Zusatzinformationen mit Hilfe einer Sendevorrichtung und einer mit dem Computer verbundenen Empfangsvorrichtung auf den Computer übertragen werden,
- bei dem die Zusatzinformationen vom Computer ausgewertet werden,
- bei dem die Zusatzinformationen zumindest teilweise die Anweisungsinformationen aufweisen und
- bei dem in Abhängigkeit von den Anweisungsinformationen die auf der mindestens einen Vorführvorrichtung vorgeführten aus Stamminformationen und ggf. aus Zusatzinformationen zusammengesetzten Informationen verändert werden.

10. Verfahren nach Anspruch 9,
bei dem die Informationen in einem bewegten Fahrzeug vorgeführt werden und der Computer und die mindestens eine Vorführvorrichtung in dem Fahrzeug angeordnet werden.

11. Verfahren nach Anspruch 9,
bei dem die Informationen an einem festen Standort vorgeführt werden.

12. Verfahren nach einem der Ansprüche 1 bis 11,
bei dem der Digital Multimedia Broadcasting (DMB) terrestrisch ausgestrahlt wird.

13. Verfahren nach einem der Ansprüche 1 bis 11,
bei dem der Digital Multimedia Broadcasting (DMB) via Satellit ausgestrahlt wird und die Empfangsvorrichtung als Satellitenempfänger ausgebildet ist.

14. Verfahren nach einem der Ansprüche 1 bis 13,
bei dem der Digital Multimedia Broadcasting (DMB) mit einer Frequenz im Ultra High Frequency (UHF) Bereich, im Mikrowellenbereich oder im Radarwellenbereich übertragen wird.

15. Vorrichtung zum Steuern eines Computers, insbesondere zur Durchführung eines Verfahrens nach einem der Ansprüche 1 bis 14,
- mit einem Computer mit Speichermitteln zum Speichern von Informationen,
- mit einer mit dem Computer verbundenen Empfangsvorrichtung zum Empfangen von Anweisungsinformationen,
**dadurch gekennzeichnet,**
- daß die Empfangsvorrichtung für ein Empfangen eines digitalen Rundfunksignals geeignet ist und
- daß Filtermittel die Anweisungsinformationen aus den digitalen Rundfunksignal herausfiltern und
- daß Dekodiermittel die Anweisungsinformationen dekodieren.

16. Vorrichtung nach Anspruch 15,
**dadurch gekennzeichnet**,
- daß die Empfangsvorrichtung für ein Empfangen eines Digital Multimedia Broadcasting (DMB) Rundfunksignals geeignet ist und
- daß der DMB-Datenstrom erste Abschnitte mit Audio- und/oder Videodaten und zweite Abschnitte mit Zusatzdaten aufweist und daß die Filtermittel die Anweisungsinformationen aus den zweiten Abschnitten herausfiltern.

17. Vorrichtung nach Anspruch 16,
**dadurch gekennzeichnet**,
daß die Filtermittel die Anweisungsinformationen als MOT-Blöcke aus dem digitalen Rundfunksignal herausfiltern.

18. Vorrichtung nach einem der Ansprüche 15 bis 17,
**dadurch gekennzeichnet**,
daß die Speichermittel die Anweisungsinformationen speichern.

19. Vorrichtung nach einem der Ansprüche 15 bis 19,
**dadurch gekennzeichnet**,
daß die Empfangsvorrichtung als terrestrische Antenne oder als Satellitenantenne ausgebildet ist.

20. Vorrichtung nach Anspruch 19,
**dadurch gekennzeichnet**,
daß die Empfangsvorrichtung geeignet ist, das digitale Rundfunksignal mit einer Frequenz im Ultra High Frequency (UHF) Bereich, im Mikrowellenbereich oder im Radarwellenbereich zu empfangen.

21. Vorrichtung nach einem der Ansprüche 15 bis 20,
**dadurch gekennzeichnet**,
daß die Vorrichtung in einem Fahrzeug (1) angeordnet ist.

22. Vorrichtung nach einem der Ansprüche 15 bis 21,
**dadurch gekennzeichnet**,
daß diese an einem festen Standort angeordnet ist.
